# DEMANDE DE BREVET EUROPEEN

(11) **EP 1 749 682 A1**
(43) Date de publication de la demande: **07.02.2007**
(21) Numéro de dépôt: 06291245.6
(22) Date de dépôt: 01.08.2006
(51) Int. Cl.: B60H 1/34

(54) **Aérateur, notamment pour automobile, comprenant des ailettes de réglage pivotantes montées sur un corps rotatif**

(30) Priorité: 01.08.2005 FR 0508200
(71) Demandeur: Key Plastics International, 61130 Belleme (FR)
(72) Inventeur: Roustel, Standley, 61260 La Rouge (FR)
(74) Mandataire: Lemoine, Robert

(57) **Abrégé**

La présente invention concerne un aérateur pour introduire un flux d'air dans un habitacle de véhicule, notamment d'automobile, comprenant un corps extérieur creux (1), un corps intermédiaire creux (10) monté rotatif dans le corps extérieur, et un organe de réglage (18) monté pivotant dans le corps intermédiaire afin de modifier l'intensité et/ou la direction du flux d'air. Dans cet aérateur l'organe de réglage (18) comprend au moins des première et deuxième ailettes (19,20) reliées l'une à l'autre parallèlement et deux tourillons (22) prenant appui sur le corps intermédiaire (10), les tourillons s'étendant perpendiculairement à l'axe longitudinal du corps extérieur (1) et parallèlement aux ailettes (19,20). En outre, le corps intermédiaire (10) comporte un renflement annulaire interne (13) conformé pour que la deuxième ailette (20) vienne en contact intime contre lui lorsque l'organe de réglage (18) est dans sa position de fermeture.

## Description

La présente invention concerne un aérateur pour introduire un flux d'air dans un habitacle de véhicule, notamment d'automobile, comprenant un corps extérieur creux comportant un axe longitudinal , un corps intermédiaire creux monté rotatif dans le corps extérieur, coaxialement avec celui-ci, et un organe de réglage monté pivotant dans le corps intermédiaire, entre une position d'ouverture maximale et une position de fermeture, afin de modifier l'intensité et/ou la direction du flux d'air introduit dans l'habitacle, l'organe de réglage comprenant au moins des première et deuxième ailettes reliées l'une à l'autre parallèlement et deux tourillons prenant appui sur le corps intermédiaire, les tourillons s'étendant perpendiculairement à l'axe longitudinal du corps extérieur et parallèlement aux ailettes.

FR-A-2 847 206 décrit un aérateur de ce type dont le corps intermédiaire comporte deux lèvres souples destinées à éviter qu'une partie du flux d'air pénètre dans l'habitacle de véhicule lorsque l'organe de réglage est dans sa position de fermeture.

La présente invention propose une solution différente pour obturer parfaitement le passage prévu pour le flux d'air dans l'aérateur, cette solution consistant à réaliser un aérateur ayant la structure indiquée au premier paragraphe ci-dessus et qui est caractérisé en ce que le corps intermédiaire comporte un renflement annulaire interne conformé pour que la deuxième ailette vienne en contact intime contre lui lorsque l'organe de réglage est dans sa position de fermeture.

Grâce à ce renflement, une obturation totale du passage emprunté par le flux d'air dans l'aérateur peut maintenant être réalisée facilement et de manière sûre lorsque l'organe de réglage est dans sa position de fermeture.

Un filet d'air, même minime, ne peut donc gêner les passagers qui ne souhaitent pas se servir du système d'aération.

Selon un mode de réalisation préféré, le corps intermédiaire peut comporter deux pattes opposées s'avançant axialement jusqu'à l'extrémité du corps extérieur qui est dirigée vers l'habitacle, et sur lesquelles l'organe de réglage est monté pivotant.

La présence de ces pattes permet de ne pas réaliser le corps intermédiaire avec une forme entièrement cylindrique sur toute sa longueur et par conséquent de réduire son poids et son encombrement.

De préférence, les tourillons sont portés par la première ailette et prennent appui sur les deux pattes du corps intermédiaire.

En position de fermeture de l'organe de réglage, la première ailette peut ainsi être coplanaire avec l'extrémité du corps extérieur qui est dirigée vers l'habitacle, et ne constitue par conséquent pas une saillie pouvant être gênante dans l'habitacle du véhicule.

Par ailleurs, pour déterminer avec précision les positions de fermeture et d'ouverture maximale, le corps intermédiaire peut avantageusement comporter au moins une encoche ayant la forme d'un arc de cercle centré sur l'axe de pivotement de l'organe de réglage et dans laquelle fait saillie un téton prévu sur ce dernier.

Selon une caractéristique particulière de l'invention, les ailettes peuvent s'étendre perpendiculairement à l'axe longitudinal du corps extérieur lorsque l'organe de réglage est dans sa position de fermeture et parallèlement audit axe longitudinal lorsque l'organe de réglage est dans sa position d'ouverture maximale.

Il convient de noter que le flux d'air sortant de l'aérateur peut être dirigé dans n'importe quelle direction puisque, d'une part l'organe de réglage peut pivoter sur le corps intermédiaire et que d'autre part celui-ci peut tourner dans le corps extérieur.

La quantité d'air admise dans l'habitacle du véhicule peut en outre être réglée de façon à être nulle ou à avoir une valeur prédéterminée définie par la position des ailettes.

Lorsque l'organe de réglage est dans sa position de fermeture, la première ailette est de préférence située dans le prolongement de l'extrémité du corps extérieur qui est dirigée vers l'habitacle, la deuxième ailette étant alors située à l'intérieur du corps intermédiaire.

Lorsque la première ailette est dans le plan de l'extrémité susmentionnée du corps extérieur, l'aérateur ne comporte pas d'élément faisant saillie dans l'habitacle du véhicule et ne risque donc pas d'être détérioré accidentellement.

Selon un mode de réalisation préféré, les corps extérieur et intermédiaire sont cylindriques tandis que les ailettes sont des disques.

Dans ce mode de réalisation, les diamètres des ailettes peuvent correspondre, au jeu de fonctionnement près, respectivement aux diamètres intérieurs du corps extérieur et du corps intermédiaire.

Un mode d'exécution de la présente invention sera décrit ci-après à titre d'exemple nullement limitatif en référence aux dessins annexés dans lesquels :
- la figure 1 est une vue schématique en perspective montrant un aérateur conforme à l'invention installé sur le tableau de bord d'un véhicule automobile ;
- la figure 2 est une vue en perspective schématique et éclatée montrant les parties constitutives de l'aérateur.
- la figure 3 est une vue de face de l'aérateur dont l'organe de réglage est en position de fermeture ;
- la figure 4 est une vue en coupe selon la ligne IV-IV de la figure 3 ;
- la figure 5 est une vue en coupe selon la ligne V-V de la figure 3, montrant le corps intermédiaire après rotation de 90° dans le corps extérieur ;
- la figure 6 est une vue analogue à la figure 5 mais montrant l'organe de réglage dans une position intermédiaire entre ses positions de fermeture et d'ouverture maximale ; et
- la figure 7 est une vue analogue à la figure 5 mais montrant l'organe de réglage dans sa position d'ouverture maximale ;

L'aérateur représenté sur les dessins à été conçu pour être installé sur le tableau de bord d'une automobile.

Il va de soi cependant que l'on ne sortirait pas du cadre de la présente invention si cet aérateur était installé sur le panneau intérieur d'une portière ou sur tout autre support situé dans l'habitacle de l'automobile. Il pourrait également être utilisé pour diffuser de l'air dans l'habitacle d'un véhicule de transport de personnes tel qu'un avion ou un wagon.

L'aérateur représenté sur les dessins comprend tout d'abord un corps extérieur cylindrique 1 logé dans un orifice 2 ménagé dans le tableau de bord 3.

Le corps intérieur 1 possède, à son extrémité tournée vers l'habitacle de l'automobile, un rebord extérieur 4 s'appuyant contre la partie du tableau de bord 3 qui constitue la périphérie de l'orifice 2. Il est en outre relié de manière conventionnelle, au niveau de son autre extrémité, à l'installation de climatisation non représentée de l'automobile.

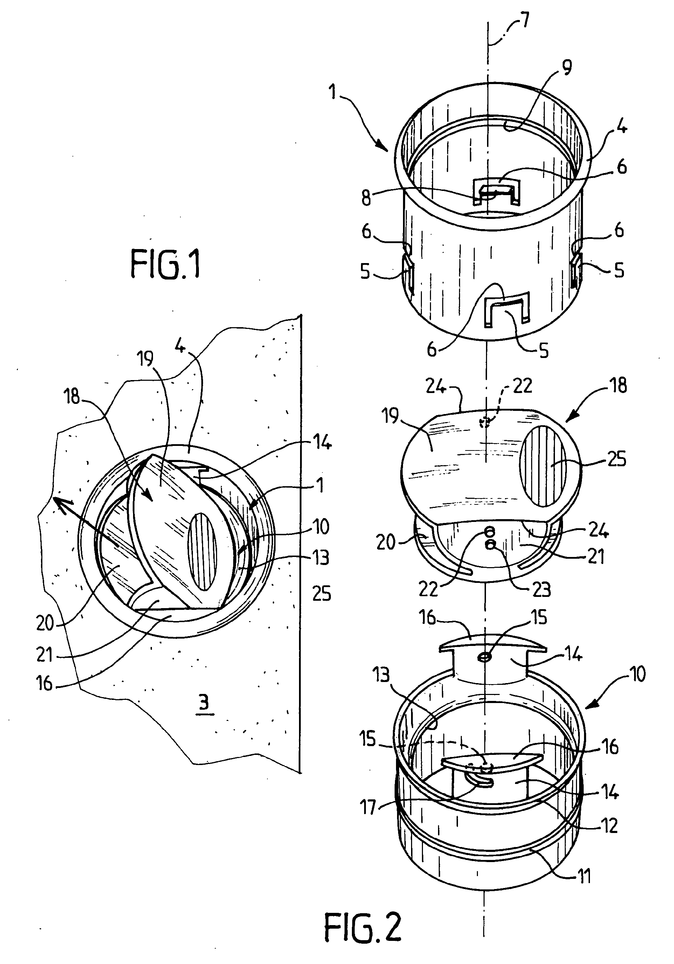

En se référant plus particulièrement à la figure 2, on remarquera que le corps 1 comporte des languettes équidistantes 5 définies par des découpes en U inversé 6 ménagées dans la partie inférieure de sa paroi périphérique.

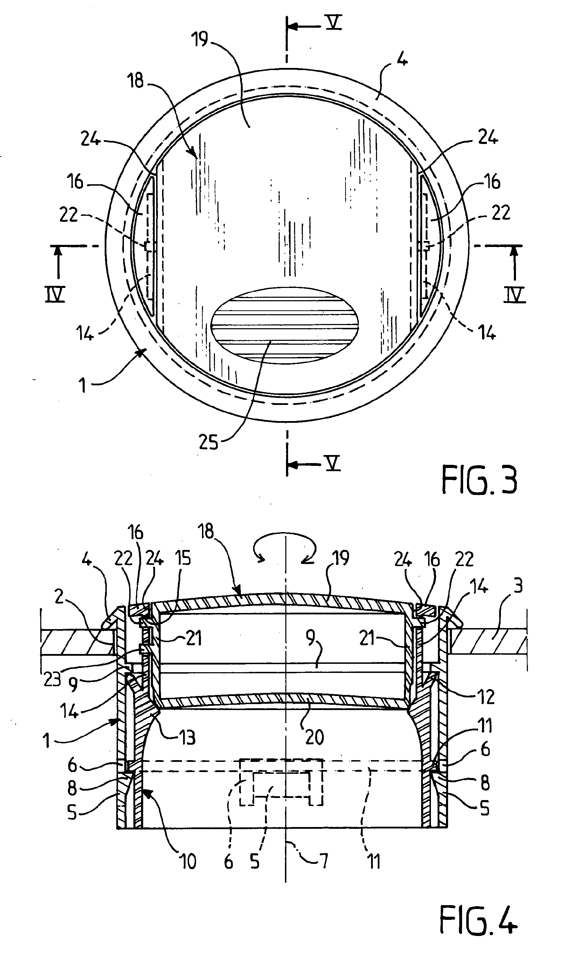

Ces languettes comportent, le long de leur côté qui est perpendiculaire à l'axe longitudinal 7 du corps 1, un renflement intérieur 8 visible sur les figures 4 à 7 et dont le rôle sera précisé ci-après.

Le corps extérieur 1 comporte en outre une nervure annulaire 9 faisant saillie sur la face intérieure de sa paroi périphérique et dont le rôle sera également précisé ci-après.

L'aérateur comprend par ailleurs un corps intermédiaire cylindrique 10 monté rotatif dans le corps extérieur 1, coaxialement avec celui-ci.

Le corps intermédiaire 10 comporte une nervure annulaire 11 faisant saillie sur la face extérieure de sa paroi cylindrique, plus près de l'extrémité inférieure que de l'extrémité supérieure de celle-ci.

La paroi cylindrique du corps intermédiaire 10 comporte par ailleurs un évasement annulaire 12 à son extrémité supérieure.

En fait, lorsque le corps intermédiaire est en place dans le corps extérieur 1, il est immobilisé axialement par les renflements 8 des langettes 5 et par la nervure 9.

La nervure 11 et l'évasement 12 sont en effet respectivement appliqués contre les renflements 8 et la nervure 9 qui servent de butées empêchant le corps intermédiaire de se déplacer axialement dans le corps extérieur 1.

Les renflements 8 et la nervure 9 autorisent en revanche un mouvement de rotation sur l'axe 7 du corps intermédiaire 10 dans le corps extérieur 1.

Le corps intermédiaire comporte par ailleurs un renflement annulaire 13 sur la face intérieure de sa paroi cylindrique.

Le renflement 13 a en coupe transversale une forme triangulaire définie par un côté supérieur rectiligne et un côté inférieur concave et forme un rétrécissement de la section de passage dans le corps intermédiaire.

La fonction du renflement 13 sera précisée ci-après.

A sa partie supérieure, la paroi cylindrique du corps intermédiaire 10 est prolongée axialement par deux pattes 14 diamétralement opposées et dont les extrémités libres sont sensiblement au même niveau que le rebord extérieur 4 du corps extérieur 1 lorsque l'aérateur est monté.

Les pattes 14 comportent chacune un orifice 15 situé sur leur axe longitudinal, à proximité de leur extrémité libre. Elles comportent en outre chacune un rebord extérieur 16 à leur extrémité libre, les rebords 16 ayant une périphérie arrondie dont le rayon est égal ou légèrement inférieur au rayon intérieur du corps extérieur 1, comme le montre clairement la figure 3.

L'une des pattes 14 comporte une encoche 17 ayant la forme d'un arc de cercle centré sur l'orifice 15 correspondant et dont les extrémités définissent avec cet orifice un angle au centre d'environ 90°.

On notera ici que chacune des deux pattes 14 pourrait comporter une encoche 17, les encoches s'étendant symétriquement par rapport à un plan diamétral perpendiculaire à l'axe reliant les deux orifices 15.

L'aérateur comprend enfin un organe de réglage 18 monté pivotant dans le corps intermédiaire et destiné à modifier l'intensité et/ou la direction du flux d'air introduit dans l'habitacle de l'automobile.

Dans le mode de réalisation représenté, l'organe de réglage 18 comprend une première ailette 19 située du côté de l'habitacle et une seconde ailette 20 située du côté de l'installation de climatisation.

Les ailettes 19, 20 sont reliées parallèlement l'une à l'autre par deux flasques latéraux 21 se faisant face et portant chacun un téton 22.

Les tétons 22 sont situés dans le prolongement l'un de l'autre et s'étendent à la fois perpendiculairement à l'axe longitudinal 7 du corps extérieur 1 et parallèlement aux ailettes 19, 20.

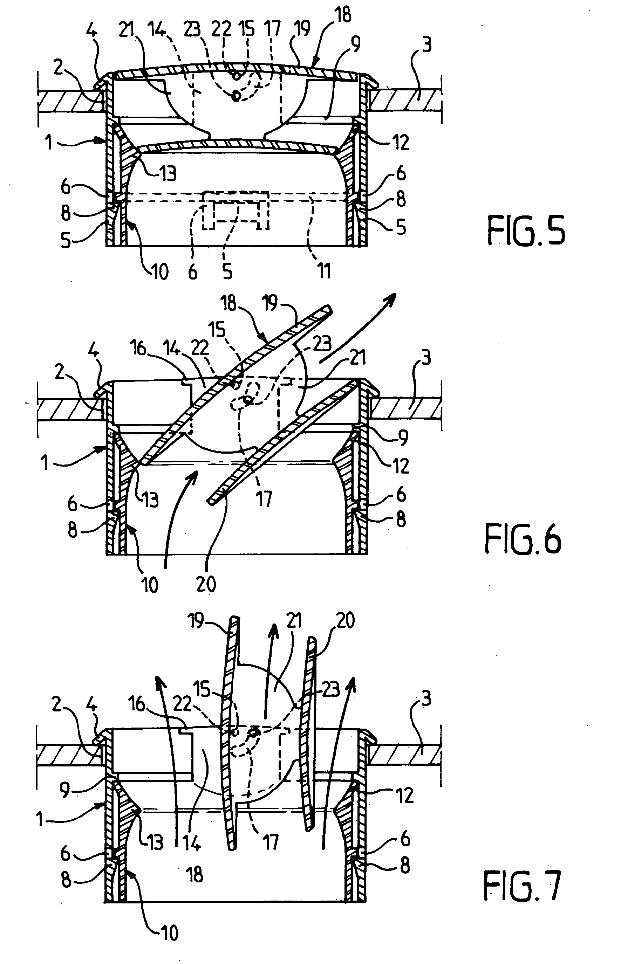

Ils font saillie sur la face extérieure des flasques 21 et sont reçus dans les orifices 15 des pattes 14 du corps intermédiaire 10. Ils permettent ainsi à l'organe de réglage 18 de pivoter entre la position de fermeture représentée sur les figures 3 à 5 et dans laquelle les ailettes 19, 20 s'étendent perpendiculairement à l'axe 7, et la position d'ouverture maximale représentée sur la figure 7 et dans laquelle les ailettes 19, 20 s'étendent parallèlement à l'axe 7.

Lorsque l'organe de réglage est dans sa position de fermeture, l'ailette 19 est située, comme représenté sur la figure 3, dans le prolongement de la face supérieure des rebords 16 des pattes 14 du corps intermédiaire 10, ainsi que de la partie supérieure du rebord extérieur 4 du corps extérieur 1.

Quant à l'ailette 20, elle est située dans le corps intermédiaire dans lequel elle prend appui sur le côté supérieur du renflement 13, interdisant ainsi toute circulation d'air en direction de l'habitacle.

Lorsque l'organe de réglage est dans sa position d'ouverture maximale, comme représenté sur la figure 7, les ailettes 19 et 20 s'étendent pratiquement parallèlement à l'axe longitudinal 7 du corps extérieur, environ la moitié de leur surface faisant saillie sur le tableau de bord 3.

Dans cette position de l'organe de réglage, le flux d'air provenant de l'installation de climatisation pénètre dans l'habitacle de l'automobile en se déplaçant pratiquement parallèlement à l'axe 7 du corps extérieur.

Lorsque l'organe de réglage est dans une position intermédiaire entre ses positions de fermeture et d'ouverture maximale, comme représenté sur la figure 6, le flux d'air est dévié latéralement en formant un angle aigu avec le tableau de bord 3.

On précisera ici que l'un des flasques 21 de l'organe de réglage comporte un deuxième téton 23 faisant saillie dans l'encoche 17 réalisée dans l'une des pattes 14 du corps intermédiaire 10.

Grâce au téton 23, l'organe de réglage ne peut pivoter au-delà de ses positions de fermeture et d'ouverture maximale, qui sont par conséquent parfaitement définies.

En se référant maintenant aux figures 3 et 4, on notera que l'ailette 19 se présente sous la forme d'un disque légèrement convexe comportant deux découpes diamétralement opposées 24, ces découpes étant parallèles et adjacentes aux pattes 14 du corps intermédiaire 10.

On notera également que l'ailette 19 présente sur sa face supérieure une dépression ovale 25 destinée à indiquer aux utilisateurs l'endroit où ils doivent exercer une pression pour déplacer l'organe de réglage de sa position de fermeture à sa position d'ouverture maximale.

L'ailette 20 se présente elle aussi sous la forme d'un disque légèrement convexe dont le diamètre est légèrement plus petit que celui de l'ailette 19, comme le montrent clairement les figures 5 à 7.

Cette différence s'explique pas le fait que les diamètres des ailettes 19 et 20 correspondent, au jeu de fonctionnement près, aux diamètres intérieurs, respectivement du corps extérieur 1 et du rétrécissement assuré par le renflement 13 du corps intermédiaire 10.

L'aérateur qui vient d'être décrit est de préférence réalisé en matière plastique de façon à pouvoir être produit en grandes quantités à des prix très compétitifs.

Ses éléments constitutifs sont très faciles à assembler. Il convient en effet de monter d'abord l'organe de réglage 18 sur le corps intermédiaire 10, ce qui revient à insérer les tétons 22 dans les orifices 15 et le téton 23 dans l'encoche 17.

Il convient ensuite d'introduire l'ensemble ainsi réalisé dans le corps extérieur 1, à partir de l'extrémité inférieure de celui-ci, jusqu'à ce que l'évasement 12 du corps intermédiaire vienne contre la nervure annulaire 9 du corps extérieur, la nervure annulaire 11 du corps intermédiaire venant alors juste au-dessus du renflement 8 des languettes 5 du corps extérieur.

Etant donné que le corps extérieur est en matière plastique, les languettes 5 sont déformables élastiquement et s'escamotent légèrement vers l'extérieur pour laisser passer l'évasement 12 et la nervure 11 du corps intermédiaire, lors de l'introduction de celui-ci dans le corps extérieur.

Le démontage de l'aérateur est tout aussi facile. Il suffit en effet d'escamoter les languettes 5 vers l'extérieur à l'aide d'un outil allongé de faible épaisseur et d'exercer une pression vers le bas sur l'ensemble constitué par l'organe de réglage et le corps intermédiaire afin d'extraire cet ensemble du corps extérieur, puis de séparer l'organe de réglage du corps intermédiaire en profitant de l'élasticité de la matière plastique utilisée pour réaliser ces deux éléments.

On ajoutera à toutes fins utiles qu'il convient de faire tourner l'ensemble organe de réglage - corps intermédiaire dans le corps extérieur pour modifier dans l'espace la direction du flux d'air pénétrant dans l'habitacle du véhicule.

Dans le mode de réalisation qui vient d'être décrit, l'organe de réglage 18 comporte deux ailettes. Il va de soi qu'il pourrait comporter un plus grand nombre d'ailettes afin de réduire la section de passage entre deux ailettes successives.

Les tétons 22 pourraient bien entendu être situés au niveau de l'ailette la plus proche de l'habitacle de l'automobile.

## Revendications

1. Aérateur pour introduire un flux d'air dans un habitacle de véhicule, notamment d'automobile, comprenant un corps extérieur creux (1) comportant un axe longitudinal (7), un corps intermédiaire creux (10) monté rotatif dans le corps extérieur, coaxialement avec celui-ci, et un organe de réglage (18) monté pivotant dans le corps intermédiaire, entre une position d'ouverture maximale et une position de fermeture, afin de modifier l'intensité et/ou la direction du flux d'air introduit dans l'habitacle, l'organe de réglage (18) comprenant au moins des première et deuxième ailettes (19,20) reliées l'une à l'autre parallèlement et deux tourillons (22) prenant appui sur le corps intermédiaire (10), les tourillons s'étendant perpendiculairement à l'axe longitudinal (7) du corps extérieur (1) et parallèlement aux ailettes (19,20), **caractérisé en ce que** le corps intermédiaire (10) comporte un renflement annulaire interne (13) conformé pour que la deuxième ailette (20) vienne en contact intime contre lui lorsque l'organe de réglage (18) est dans sa position de fermeture.

2. Aérateur selon la revendication 1, **caractérisé en ce que** le corps intermédiaire (10) comporte deux pattes opposées (14) s'avançant axialement jusqu'à l'extrémité du corps extérieur (1) qui est dirigée vers l'habitacle et sur lesquelles l'organe de réglage (18) est monté pivotant.

3. Aérateur selon la revendication 2, **caractérisé en ce que** les tourillons (22) sont portés par la première ailette (19) et prennent appui sur les deux pattes (14) du corps intermédiaire (10).

4. Aérateur selon l'une quelconque des revendications précédentes, **caractérisé en ce que** le corps intermédiaire (10) comporte au moins une encoche (17) ayant la forme d'un arc centré sur l'axe de pivotement de l'organe de réglage (18) et dans laquelle fait saillie un téton (23) prévu sur ce dernier.

5. Aérateur selon l'une quelconque des revendications précédentes, **caractérisé en ce que** les ailettes (19,20) s'étendent perpendiculairement à l'axe longitudinal (7) du corps extérieur (1) lorsque l'organe de réglage (18) est dans sa position de fermeture, et parallèlement audit axe longitudinal lorsque l'organe de réglage est dans sa position d'ouverture maximale.

6. Aérateur selon l'une quelconque des revendications précédentes, **caractérisé en ce que**, lorsque l'organe de réglage (18) est dans sa position de fermeture, la première ailette (19) est située dans le prolongement de l'extrémité du corps extérieur (1) qui est dirigée vers l'habitacle, la deuxième ailette (20) étant alors située à l'intérieur du corps intermédiaire (10).

7. Aérateur selon l'une quelconque des revendications précédentes, **caractérisé en ce que** les corps extérieur (1) et intermédiaire (10) sont cylindriques tandis que les ailettes (19,20) sont des disques.

8. Aérateur selon la revendication 7, **caractérisé en ce que** les ailettes (19,20) ont des diamètres qui correspondent respectivement, au jeu de fonctionnement près, aux diamètres intérieurs du corps extérieur (1) et du corps intermédiaire (10).
